# EUROPEAN PATENT SPECIFICATION

(11) **EP 3 866 240 B1**
(45) Date of publication and mention of the grant of the patent: **24.08.2022**
(21) Application number: 20211773.5
(22) Date of filing: 04.12.2020
(51) Int. Cl.: H01M 8/2475, H01M 8/04029, H01M 8/04007, H01M 8/04858, H01M 8/04537, H01M 8/04701, B60L 50/72, H02M 1/32, B60L 50/70, B60L 58/33

(54) **FUEL CELL UNIT**
BRENNSTOFFZELLENEINHEIT
UNITÉ DE PILE À COMBUSTIBLE

(30) Priority: 12.02.2020 JP 2020021821
(43) Date of publication of application: 18.08.2021
(73) Proprietor: TOYOTA JIDOSHA KABUSHIKI KAISHA, Toyota-shi Aichi-ken, 471-8571 (JP)
(72) Inventor: HAYASHI, Atsushi, Aichi-ken, 471-8571 (JP); YAMASAKI, Hiromi, Aichi-ken, 471-8571 (JP); HAYASHI, Kazuki, Aichi-ken, 471-8571 (JP)
(74) Representative: D Young & Co LLP

(56) References cited:
- EP-A1- 3 382 784
- EP-A1- 3 490 030
- US-A1- 2007 178 345
- US-A1- 2018 277 870
- US-A1- 2019 260 058

## Description

### BACKGROUND OF THE INVENTION

### 1. Field of the Invention

The invention relates to a fuel cell unit.

### 2. Description of Related Art

There is known a fuel cell unit where a fuel cell stack and a boost converter are accommodated in a single case, as disclosed in Japan Unexamined Patent Application Publication No. 2018-163861 (JP 2018-163861 A), EP 3382784 A1, US 2018/277870 A1 and EP 3490030 A1, for example.

### SUMMARY OF THE INVENTION

There is demand for further reduction in size of fuel cell units installed in electric vehicles, due to spatial restrictions in installation space of vehicles.

On the other hand, fuel cell stacks are heat generators, and accordingly the smaller the size of the fuel cell unit becomes, the more readily the boost converter is subjected to heat from the fuel cell stack. Some components of the boost converter have low temperature limits. Particularly, current sensors and capacitors have lower temperature limits as compared to other components, and cooling by a refrigerant, such as described in JP 2018-163861 A, is difficult.

The invention reduces the size of a fuel cell unit where a fuel cell stack and a boost converter are accommodated in a single case, while protecting at least one of a current sensor and a capacitor that have particularly low temperature limits out of components of the boost converter from heat from the fuel cell stack.

A fuel cell unit according to an aspect of the invention includes a fuel cell stack, a boost converter, and a case that accommodates the fuel cell stack and the boost converter in a same space. The fuel cell stack has a coolant channel inside where coolant flows in one direction, and has a first surface parallel to a direction in which the coolant channel extends. The boost converter is disposed across a gap from the first surface of the fuel cell stack, without being partitioned by a heat shielding member. The boost converter includes a current sensor and a capacitor disposed following the first surface. At least one of the current sensor and the capacitor is disposed on an upstream side from a middle of the coolant channel, in the direction in which the coolant channel extends.

According to the above configuration, accommodating the fuel cell stack and the boost converter in the same space without partitioning by a heat shielding member enables reduction in size of the fuel cell unit. Although the boost converter is readily subjected to radiant heat from the fuel cell stack, at least one of the current sensor and the capacitor that has a particularly low temperature limit out of the components of the boost converter is disposed on the upstream side from the middle of the coolant channel in the direction in which the coolant channel extends, i.e., is disposed in a region where the temperature is relatively low. Accordingly, the size of the fuel cell unit can be reduced while protecting at least one of the current sensor and the capacitor from heat from the fuel cell stack.

The current sensor and the capacitor may be arranged side by side in a direction orthogonal to the direction in which the coolant channel extends, on the upstream side from the middle of the coolant channel. According to this configuration, both the current sensor and the capacitor can be disposed in a region where the temperature is relatively low, and both can be protected from heat from the fuel cell stack.

The boost converter may include at least one reactor and a power module. The reactors and the power module may be arranged side by side in a direction orthogonal to the direction in which the coolant channel extends, along with the current sensor and the capacitor. According to this configuration, the reactor and the power module that require cooling by coolant can also be disposed in a relatively low-temperature region.

The current sensor may be provided on a line connecting the at least one reactor and the power module. Also, a cooler where coolant different from the coolant flowing the coolant channel flows may be provided for each of the at least one reactor and the power module. The current sensor may be encompassed by the coolant channel, the cooler of the reactors, and the cooler of the power module. According to this configuration, the current sensor can be cooled from the surroundings.

The location where at least one of the current sensor and the capacitor is disposed, preferably where both of the current sensor and the capacitor are disposed, may be a location where the ambient atmosphere temperature is no less than 90°C and no more than 100°C while the fuel cell stack is operating. The temperature limits of the current sensor and the capacitor are around 110 to 120°C. Accordingly, by disposing the current sensor and the capacitor at a location where the ambient atmosphere temperature is within the aforementioned temperature range, a situation where the boost converter is unnecessarily distanced from the fuel cell stack, thereby impeding reduction in size of the fuel cell unit, can be avoided, and a tolerable temperature rise margin can be secured.

Note that from the perspective of reducing the size of the fuel cell stack, the fuel cell stack and the boost converters may be directly coupled by bus bars.

As described above, according to the fuel cell unit of the invention, accommodating the fuel cell stack and the boost converter in the same space enables reduction in size of the fuel cell unit. Also, at least one of the current sensor and the capacitor that has a particularly low temperature limit out of the components of the boost converter is disposed in a region where the temperature is relatively low, and accordingly can be protected from heat from the fuel cell stack.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of a power train system of a fuel cell vehicle;
FIG. 2 is a diagram illustrating a structure of a fuel cell unit and temperature distribution of surface temperature of a fuel cell stack;
FIG. 3 is a diagram for describing temperature limit of components of a boost converter;
FIG. 4 is a schematic diagram of a cooling system of a fuel cell system;
FIG. 5Ais a diagram illustrating a positional relation of the fuel cell stack and the boost converter;
FIG. 5B is a graph showing a temperature of the fuel cell stack;
FIG. 6A is top planar views of a layer, illustrating the structure of the fuel cell unit in detail;
FIG. 6B is top planar views of a layer, illustrating the structure of the fuel cell unit in detail;
FIG. 6C is top planar views of a layer, illustrating the structure of the fuel cell unit in detail;
FIG. 7 is a cross-sectional arrow view taken along VII-VII in FIGS. 6A, 6B and 6C, illustrating the structure of the fuel cell unit in detail; and
FIG. 8 is a diagram illustrating a modification of a positional relation of a fuel cell stack and a boost converter.

### DETAILED DESCRIPTION OF EMBODIMENTS

An embodiment of the invention will be described below with reference to the drawings. It should be noted, however, that when mention is made regarding numerical values regarding the number, quantity, amount, range, and so forth of the elements in the embodiment described below, the invention is not limited to the numerical values described, unless specifically stated so, or unless the numerical value is clearly identified by principle. Also, the structures and so forth described in the embodiment below are not indispensable to the invention unless specifically stated so, or unless clearly identified by principle.

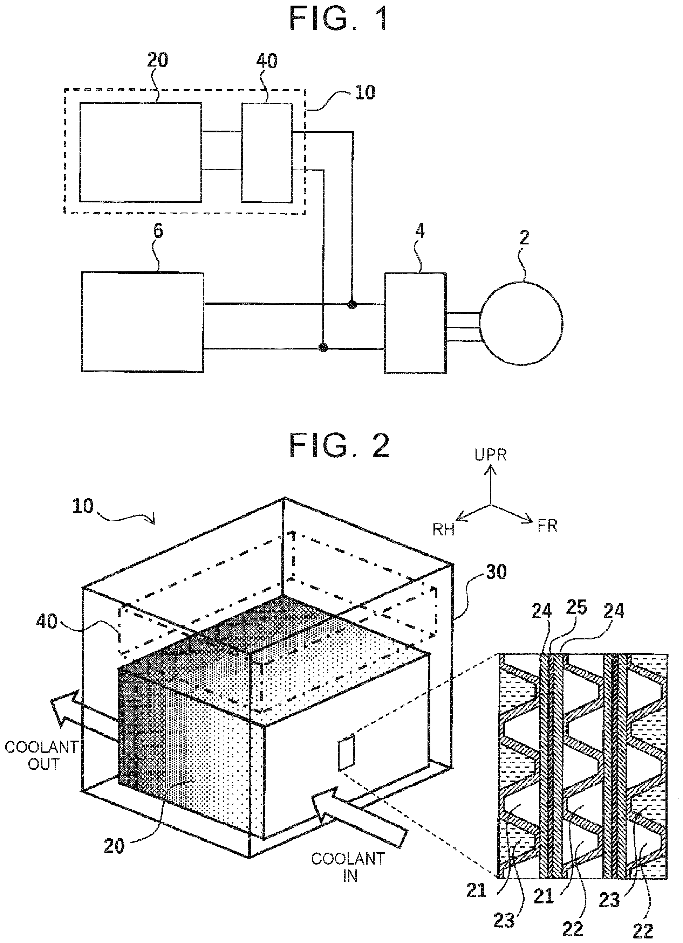

FIG. 1 is a schematic diagram of a power train system of a fuel cell vehicle. In a fuel cell vehicle, an electric motor 2 is operated by electricity generated at a fuel cell stack 20, and the vehicle travels by drive force generated at the electric motor 2. The electric motor 2 is a motor generator operable as a generator. A battery 6 is connected to the fuel cell stack 20 and the electric motor 2. The battery 6 supplies electricity to the electric motor 2 when the fuel cell stack 20 is not able to generate sufficient electricity, and stores electricity generated at the electric motor 2 when performing regenerative operations. The electric motor 2 is an AC electric motor, and accordingly the fuel cell stack 20 and the battery 6 are connected to the electric motor 2 via an inverter 4 that converts DC current into AC current.

A boost converter 40 that boosts electricity generated by the fuel cell stack 20 is attached to the fuel cell stack 20. Fuel cell stacks 20 that are installed in fuel cell vehicles have an issue of reduction in costs and reduction in size. This issue can be resolved by reducing the number of cells. However, reducing the number of cells reduces the overall total voltage of the fuel cell stack 20. Accordingly, the boost converter 40 is necessary for an output unit of the fuel cell stack 20, to boost the output voltage to the required voltage. The fuel cell stack 20 and the boost converter 40 are provided as a single fuel cell unit 10, to enable effective placement in the limited space of the vehicle.

Hereinafter, in the present specification, the fuel cell unit will be written as "FC unit", and the fuel cell stack will be written as "FC stack". Also, the boost converter is a DC-DC converter for a fuel cell, and accordingly will be written as "FDC" hereinafter.

FIG. 2 illustrates an overview of a structure of the FC unit 10. The FC unit 10 is configured of the FC stack 20 and the FDC 40 accommodated in a single case 30. No partition is provided between the FC stack 20 and the FDC 40, in order to maximally reduce the size of the case 30, and both are accommodated in the same space. The FDC 40 is disposed above the FC stack 20, overlaying the FC stack 20. Note however, that the FDC 40 and the FC stack 20 are not in contact, and a gap of a level sufficient to protect the FDC 40 from heat generated at the FC stack 20 is provided between the FDC 40 and the upper surface of the FC stack 20.

FIG. 2 illustrates an enlarged cross-sectional view illustrating the inner configuration of the FC stack 20. Cells that constitute the FC stack 20 are configured by interposing a membrane electrode assembly (MEA) 25 by a pair of separators 24, with a hydrogen channel 21 provided on one side thereof and an oxygen channel 22 provided on the other side. Electricity and water are generated by chemical reaction between hydrogen and oxygen in each cell of the FC stack 20 configured as described above. A coolant channel 23 where coolant flows is provided inside the FC stack 20, since high temperatures are generated when operating due to this chemical reaction. A primary component of the coolant is ethylene glycol, for example. The coolant channel 23 is provided in parallel with the hydrogen channel 21 and the oxygen channel 22, and the coolant flows in one direction. The direction in which the coolant flows is a direction from the front (FR) of the vehicle toward the rear.

The coolant absorbs heat from the FC stack 20 while flowing through the coolant channel 23, and gradually becomes hotter. Accordingly, the cooling effects of the FC stack 20 by coolant are higher the closer to the inlet side of the coolant channel 23, and are lower the closer to the outlet side of the coolant channel 23. As a result, a temperature distribution such as illustrated in FIG. 2 is generated in the surface temperature of the FC stack 20 from the inlet side of the coolant channel 23 toward the outlet side. The difference in surface temperature is represented by the density of dots in dot patterns drawn on the top and the side surfaces of the FC stack 20 in FIG. 2. The lower the relative density of dots is the closer a region is to the inlet of the coolant channel 23, meaning that the surface temperature at this region is relatively low. On the other hand, the higher the relative density of dots is the closer a region is to the outlet of the coolant channel 23, meaning that the surface temperature at this region is relatively high.

As described above, the FC stack 20 is a heat generator, although internally cooled by the coolant channel 23. In an arrangement where the FC stack 20 and the FDC 40 are disposed in close proximity within the same space in the case 30, the FDC 40 is subjected to the heat generated by the FC stack 20. The FDC 40 is configured including at least reactors, an Intelligent Power Module (IPM), a current sensor, a capacitor, a bus bar, a terminal block, and a branching box. When disposing the FC stack 20 and the FDC 40 in the same space in close proximity, how to protect part of these components that have particularly low temperature limits from the heat from the FC stack 20 is important.

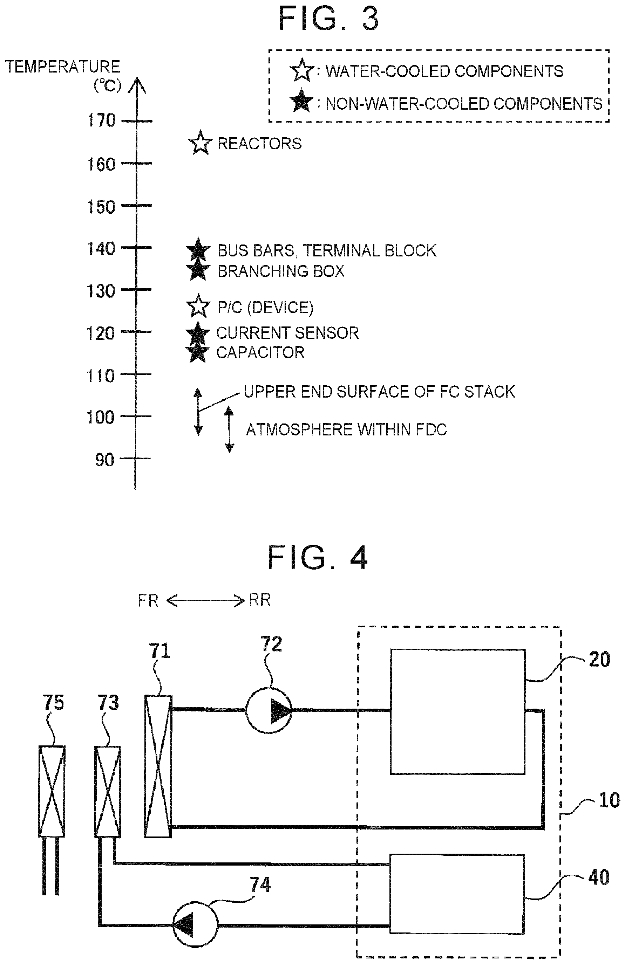

FIG. 3 illustrates an example of temperature limits of components of the FDC 40. The temperature limits differ depending on the component, but the temperature limits of the current sensor and the capacitor are around 110 to 120°C, and are particularly low as compared to the other components. Note that while the temperature limit of the capacitor is lower than that of the current sensor in the example illustrated in FIG. 3, the temperature limit of the current sensor may be lower than that of the capacitor depending on the product. The surface temperature at the upper end surface of the FC stack 20 when operating is around 95 to 105°C, and the atmosphere temperature within the FDC 40 is several degrees lower than this. Accordingly, it can be said that the tolerable temperature rise margin is extremely small with regard to the current sensor and the capacitor. While the reactors and the power card (P/C) of the IPM can be water-cooled by coolant, water cooling of the current sensor and the capacitor is difficult. Accordingly, in order to dispose the FDC 40 and the FC stack 20 in close proximity to reduce the size of the FC unit 10, there is a need to protect at least the one of the current sensor and the capacitor that has a lower temperature limit, and both, if the temperature limits are the same, from the heat of the FC stack 20.

Now, an overview of the cooling system of the FC system will be described with reference to FIG. 4. In the FC unit 10, the FC stack 20 and the FDC 40 are both the object of cooling by coolant, as described earlier. The FC stack 20 is disposed in a first coolant circulation system where coolant, cooled by a radiator 71, is circulated by a pump 72. The FDC 40 is disposed in a second coolant circulation system where coolant, cooled by a radiator 73, is circulated by a pump 74. A power control unit (PCU), omitted from illustration, is also disposed in the second coolant circulation system. With regard to the positions of installation in the vehicle, the radiator 73 for the FDC 40 is disposed rearward of an air conditioner condenser unit 75, and disposed rearward thereof is the radiator 71 for the FC stack 20. The FC stack 20 and the FDC 40 are disposed rearward of the radiator 71, with the respective coolant inlet sides facing forward in the vehicle.

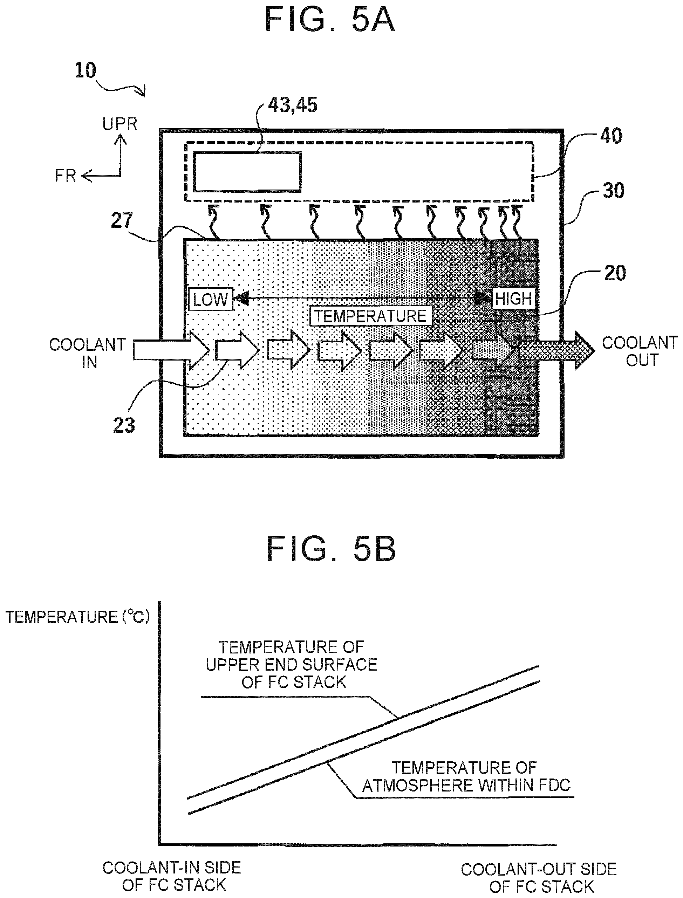

When the FC stack 20 is operating, a temperature distribution is generated in the surface temperature of the FC stack 20 in the direction of flow of coolant, as described earlier. A temperature difference of around 10°C, for example, may be generated between the inlet side and the outlet side of coolant. It is preferable to dispose the current sensor and the capacitor in as low a temperature region as possible, to protect these components from the heat of the FC stack 20. Accordingly, the FC stack 20 and the FDC 40 are disposed in a positional relation illustrated in FIG. 5A in the FC unit 10 according to the present embodiment.

As illustrated in FIG. 5A, the FDC 40 is accommodated in the case 30 in common with the FC stack 20, and disposed above the FC stack 20 and in close proximity with an upper end surface 27 of the FC stack 20. No partition or the like is provided between the FDC 40 and the FC stack 20. The upper end surface 27 of the FC stack 20 corresponds to a first surface parallel to a direction in which the coolant channel extends in the present embodiment.

A current sensor 43 and a capacitor 45, which are parts of the FDC 40, are disposed at the side of the region where the FDC 40 can be disposed that is closer to the coolant inlet side in particular. Specifically, the current sensor 43 and the capacitor 45 are disposed on the upstream side from the middle of the coolant channel 23, in the direction of flow in the coolant channel 23 schematically illustrated in FIG. 5A.

The FDC 40 is directly heated by radiant heat radiated from the FC stack 20, and also the surrounding atmosphere is filled with hot air heated by the FC stack 20. However, the temperature at the upper end surface of the FC stack 20 and the inside atmosphere temperature is lower the closer to the inlet side of coolant of the FC stack 20, as illustrated in FIG. 5B. Accordingly, the placement illustrated in FIG. 5A enables radiant heat from the upper end surface 27 of the FC stack 20, to which the current sensor 43 and the capacitor 45 are subjected, to be kept relatively low, and the atmosphere temperature around the current sensor 43 and the capacitor 45 can also be kept relatively low.

With regard to the relation as to the ambient atmosphere temperature while the FC stack 20 is generating, the current sensor 43 and the capacitor 45 may be disposed at a location where the ambient atmosphere temperature is no less than 90°C and no more than 100°C. The temperature limits of the current sensor 43 and the capacitor 45 are around 110 to 120°C, as described with reference to FIG. 3. Accordingly, by disposing the current sensor 43 and the capacitor 45 at a location where the ambient atmosphere temperature is no less than 90°C and no more than 100°C, a situation can be avoided where the FDC 40 is unnecessarily distanced from the FC stack 20, thereby impeding reduction in size of the FC unit 10. Also, the tolerable temperature rise margin can be secured.

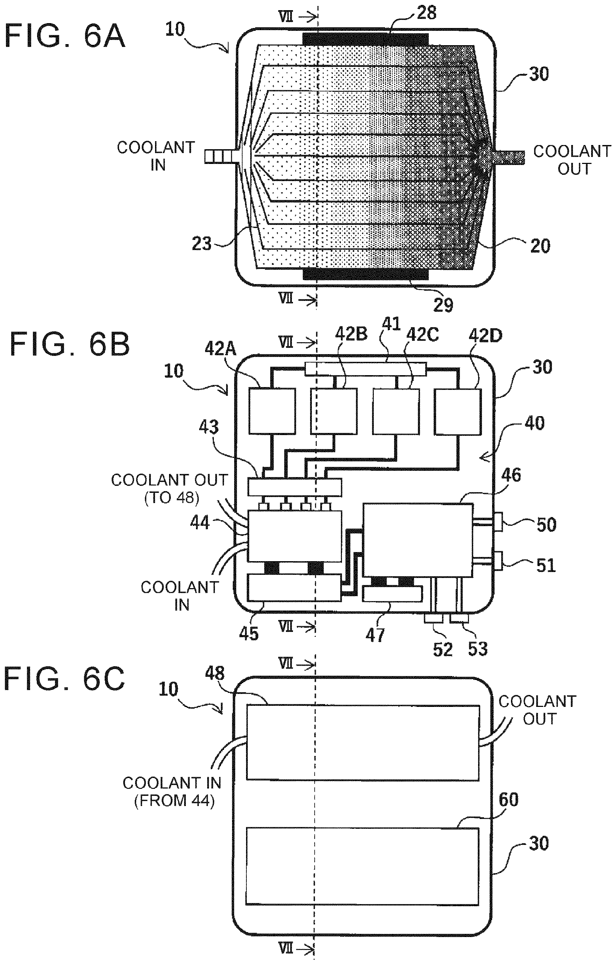

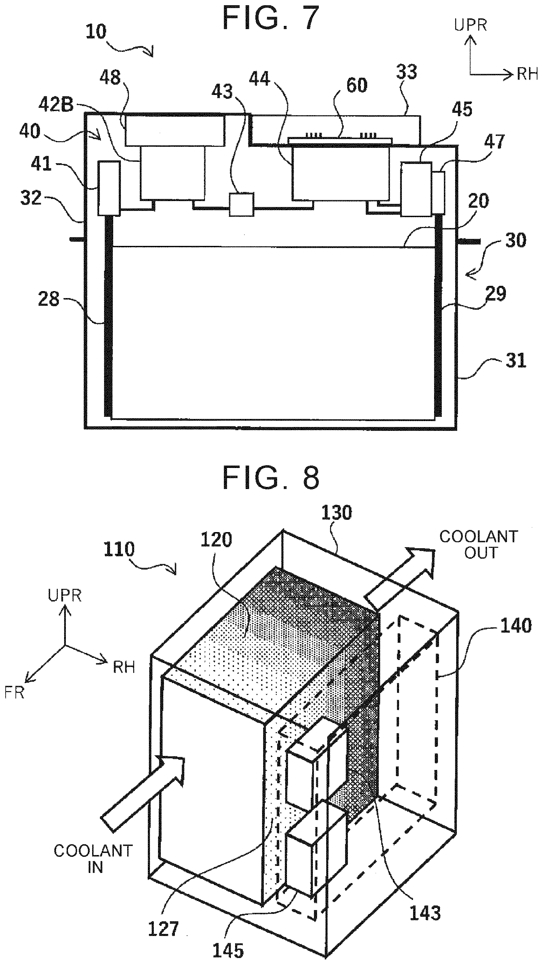

Next, the detailed structure of the FC unit 10 will be described with reference to FIGS. 6A to 6C and 7. The FC unit 10 has a two-layer structure, consisting of the FC stack 20 and the FDC 40, and further, the FDC 40 itself has a two-layer structure. Accordingly, the FC unit 10 overall has a three-layer structure. FIG. 6A, FIG. 6B and FIG. 6C is top planar views of each layer of the FC unit 10.

FIG. 6A is a top planar view of the FC stack 20. The coolant channel 23 that extends in one direction is formed within the FC stack 20, as described earlier. The coolant channel 23 is formed in a direction orthogonal to the cell stacking direction. Bus bars 28 and 29 are attached at respective ends of the FC stack 20 in the cell stacking direction, as electrodes to extract electricity generated by fuel cell reactions occurring in the cells. In FIG. 6A, the bus bar 28 at the top side in the drawing is a P pole, and the bus bar 29 at the bottom side in the drawing is an N pole.

FIG. 6B is a top planar view of a downstairs portion of the FDC 40. Disposed in the downstairs portion of the FDC 40 are a P terminal 41, reactors 42A to 42D, the current sensor 43, an IPM 44, the capacitor 45, a branching box and terminal block 46, and an N terminal 47. Of these, the P terminal 41 and the N terminal 47 are terminals for connecting to the FC stack 20. The P terminal 41 is positioned directly above the P bus bar 28 and is directly coupled to the P bus bar 28. The N terminal 47 is positioned directly above the N bus bar 29 and is directly coupled to the N bus bar 29.

The FDC 40 is a multiphase boost converter, and has a plurality (four in FIG. 6B) of reactors 42A to 42D. In top planar view, the reactors 42A to 42D are equidistantly arranged side by side in the range of the end of the FC stack 20 at the coolant inlet side to the end at the coolant outlet side, following the direction in which the coolant channel 23 extends. The reactors 42Ato 42D are connected in parallel to the P terminal 41 by a bus bar.

The reactors 42A to 42D are connected in parallel to the IPM 44 by bus bars. The IPM 44 is water-cooled, and coolant of the second coolant circulation system cooled at the radiator 73 (see FIG. 4) is first passed to the IPM 44. The bus bars respectively connecting the reactors 42A to 42D and the IPM 44 each have the current sensor 43 attached thereto. The current sensor 43 is a Hall effect current sensor, having a magnetic core through which a bus bar passes, and a Hall element inserted into a gap of the magnetic core, for example. The current sensor 43 is a part that has a particularly low temperature limit out of the components of the FDC 40, and accordingly the current sensor 43 is disposed at the upper side and at the coolant-inlet-side end of the FC stack 20 in top planar view.

The IPM 44 is disposed alongside the current sensor 43, in a direction orthogonal to the direction in which the coolant channel 23 extends. The capacitor 45 for smoothing is connected to the output side of the IPM 44 by bus bars. The capacitor 45 also is a part that has a particularly low temperature limit out of the components of the FDC 40, and accordingly the capacitor 45 is disposed at the upper side and at the coolant-inlet-side end of the FC stack 20 in top planar view. By laying out the parts in this way, the reactor 42A, the current sensor 43, the IPM 44, and the capacitor 45 are positioned at the upstream side from the middle of the coolant channel 23 at the downstairs portion of the FDC 40 in top planar view, and are arrayed in a row in a direction orthogonal to the direction in which the coolant channel 23 extends.

The N terminal 47 is connected to the capacitor 45 via the branching box and terminal block 46. The branching box and terminal block 46 is disposed rearward from the IPM 44 and the capacitor 45, i.e., on the downstream side of the coolant channel 23 as to the IPM 44 and the capacitor 45. Bus bars are used for connecting the capacitor 45 and the branching box and terminal block 46, and bus bars are also used for connecting the N terminal 47 and the branching box and terminal block 46. Connected to the branching box and terminal block 46 are an output terminal 50 for a battery, provided outside of the case 30, an output terminal 51 for the PCU, an output terminal 52 for an air compressor inverter, and an output terminal 53 for a compressor for an air conditioner. Of these, the output terminals 50 and 51 that output high voltage are provided to a surface at the rearward side in the vehicle front-rear direction, taking into consideration safety in a collision.

FIG. 6C is a top planar view of an upstairs portion of the FDC 40. A water-cooling reactor cooler 48 and an IPM electronic control unit (ECU) board 60 are disposed at the upstairs portion of the FDC 40. Coolant that has passed through the IPM 44 passes through the reactor cooler 48. The reactors 42A to 42D are attached to the bottom surface of the reactor cooler 48. The IPM ECU board 60 is a board that controls switching devices of the IPM 44. The IPM ECU board 60 is disposed above the IPM 44. However, unlike the other components, the IPM ECU board 60 is accommodated in a separate chamber provided at the top of the case 30.

FIG. 7 is a cross-sectional arrow view taken along VII-VII in FIG. 6A, FIG. 6B and FIG. 6C. The VII-VII cross-section is a cross-section taken at a region on the upstream side from the middle of the coolant channel 23 in the direction in which the coolant channel 23 extends. That is to say, the VII-VII cross-section is a cross-section of the FC unit 10 taken at a region where the temperature is relatively low. The case 30 is configured of a lower case 31 that accommodates the FC stack 20, an upper case 32 that accommodates the FDC 40, and an upper cover 33 that accommodates the IPM ECU board 60. The IPM 44 and the reactor cooler 48 are attached to a ceiling portion of the upper case 32. The lower case 31 and the upper case 32 form a single space with no partition therein. The FC stack 20 and the FDC 40 are directly coupled by the P bus bar 28 and the N bus bar 29 in this single space.

It can be seen from the VII-VII cross-section that the current sensor 43 and the capacitor 45, which have particularly low temperature limits out of the components of the FDC 40, are disposed in a region where the temperature is relatively low. Accordingly, the current sensor 43 and the capacitor 45 can be protected from the heat of the FC stack 20 while reducing the size of the FC unit 10. It can also be seen in this cross-section that the reactors 42B and the IPM 44 are disposed alongside the current sensor 43 and the capacitor 45. The reactor 42B and the IPM 44 that require cooling by coolant are also disposed in a relatively low-temperature region, thereby preventing overheating thereof.

FIG. 8 is a diagram illustrating a modification of the positional relation of the FC stack and the FDC. In an FC unit 110 according to this modification as well, an FDC 140 and an FC stack 120 are accommodated in a common case 130. No partition or the like is provided between the FDC 140 and the FC stack 120, and the FDC 140 is disposed in close proximity with a side surface 127 of the FC stack 120. The side surface 127 of the FC stack 120 with which the FDC 140 is disposed in close proximity is a side surface that is not provided with a coolant inlet or outlet, and is not provided with a P bus bar or an N bus bar. In this modification, the above-described side surface 127 of the FC stack 120 corresponds to a first surface parallel to a direction in which the coolant channel extends.

A current sensor 143 and a capacitor 145, which are parts of the FDC 140, are disposed at the side of the region where the FDC 140 can be disposed, that is closer to the coolant inlet in particular. Specifically, the current sensor 143 and the capacitor 145 are disposed on the upstream side from the middle of a coolant channel in the direction in which the coolant channel extends. In this modification, the current sensor 143 and the capacitor 145 are arranged side by side in the up-down direction.

In the embodiment and the modification thereof described above, both the current sensor and the capacitor are disposed on the upstream side from the middle of the coolant channel, in the direction in which the coolant channel extends. However, an arrangement may be made where at least the one of the current sensor and the capacitor that has a lower temperature limit is disposed on the upstream side from the middle of the coolant channel, in the direction in which the coolant channel extends. In this case, one of the current sensor and the capacitor can be protected from heat of the fuel cell unit while reducing the size of the fuel cell unit.

## Claims

1. A fuel cell unit (10), comprising:
a fuel cell stack (20) having a coolant channel (23) inside where coolant flows in one direction, and having a first surface parallel to a direction in which the coolant channel extends;
a boost converter (40) disposed across a gap from the first surface without being partitioned by a heat shielding member, the boost converter including a current sensor (43) and a capacitor (45) disposed following the first surface; and
a case (30) that accommodates the fuel cell stack and the boost converter in a same space, wherein
at least one of the current sensor and the capacitor is disposed on an upstream side from a middle of the coolant channel, in the direction in which the coolant channel extends.

2. The fuel cell unit according to claim 1, wherein the current sensor and the capacitor are arranged side by side in a direction orthogonal to the direction in which the coolant channel extends, on the upstream side from the middle of the coolant channel.

3. The fuel cell unit according to claim 2, wherein:
the boost converter includes at least one reactor (42A, 42B, 42C, 42D) and a power module (44); and
the at least one reactor and the power module are arranged side by side in a direction orthogonal to the direction in which the coolant channel extends, along with the current sensor and the capacitor.

4. The fuel cell unit according to claim 3, wherein:
a cooler (48) where coolant different from the coolant flowing the coolant channel flows is provided for each of the at least one reactor and the power module; and
the current sensor is encompassed by the coolant channel, the cooler of the at least one reactor, and the cooler of the power module.

5. The fuel cell unit according to claim 3, wherein the current sensor is provided on a line connecting the at least one reactor and the power module.

6. The fuel cell unit according to claim 1, wherein at least one of the current sensor and the capacitor is disposed in a location where an ambient atmosphere temperature is no less than 90°C and no more than 100°C while the fuel cell stack is operation.

7. The fuel cell unit according to any one of claims 1 to 6, wherein the fuel cell stack and the boost converter are directly coupled by bus bars (28, 29).

## Patentansprüche

1. Brennstoffzelleneinheit (10), die Folgendes umfasst:
einen Brennstoffzellenstapel (20), der einen Kühlmittelkanal (23) aufweist, in dem Kühlmittel in eine Richtung strömt, und eine erste Fläche parallel zu einer Richtung aufweist, in der sich der Kühlmittelkanal erstreckt;
einen Aufwärtswandler (40), der über einen Spalt von der ersten Fläche angeordnet ist, ohne durch ein Wärmeabschirmelement abgetrennt zu sein, wobei der Aufwärtswandler einen Stromsensor (43) und einen Kondensator (45) umfasst, die der ersten Fläche folgend angeordnet sind; und
ein Gehäuse (30), das den Brennstoffzellenstapel und den Aufwärtswandler in einem selben Raum aufnimmt, wobei
mindestens einer des Stromsensors und des Kondensators auf einer stromaufwärtigen Seite von einer Mitte des Kühlmittelkanals in der Richtung, in der sich der Kühlmittelkanal erstreckt, angeordnet ist.

2. Brennstoffzelleneinheit nach Anspruch 1, wobei der Stromsensor und der Kondensator nebeneinander in einer Richtung orthogonal zu der Richtung, in der sich der Kühlmittelkanal erstreckt, auf der stromaufwärtigen Seite von der Mitte des Kühlmittelkanals angeordnet sind.

3. Brennstoffzelleneinheit nach Anspruch 2, wobei:
der Aufwärtswandler mindestens einen Reaktor (42A, 42B, 42C, 42D) und ein Leistungsmodul (44) umfasst; und
der mindestens eine Reaktor und das Leistungsmodul nebeneinander in einer Richtung orthogonal zu der Richtung, in der sich der Kühlmittelkanal erstreckt, zusammen mit dem Stromsensor und dem Kondensator angeordnet sind.

4. Brennstoffzelleneinheit nach Anspruch 3, wobei:
ein Kühler (48), in dem Kühlmittel, das sich von dem durch den Kühlmittelkanal strömenden Kühlmittel unterscheidet, strömt, für jeden des mindestens einen Reaktors und des Leistungsmoduls bereitgestellt ist; und
der Stromsensor durch den Kühlmittelkanal, den Kühler des mindestens einen Reaktors und den Kühler des Leistungsmoduls umgeben ist.

5. Brennstoffzelleneinheit nach Anspruch 3, wobei der Stromsensor an einer Leitung bereitgestellt ist, die den mindestens einen Reaktor und das Leistungsmodul verbindet.

6. Brennstoffzelleneinheit nach Anspruch 1, wobei mindestens einer des Stromsensors und des Kondensators an einer Stelle angeordnet ist, an der eine Umgebungsatmosphärentemperatur nicht kleiner als 90 °C und nicht größer als 100 °C ist, während der Brennstoffzellenstapel in Betrieb ist.

7. Brennstoffzelleneinheit nach einem der Ansprüche 1 bis 6, wobei der Brennstoffzellenstapel und der Aufwärtswandler durch Sammelschienen (28, 29) direkt gekoppelt sind.

## Revendications

1. Unité de pile à combustible (10), comprenant :
un assemblage de piles à combustible (20) ayant un canal de refroidissement (23) à l'intérieur duquel du liquide de refroidissement s'écoule dans une direction, et ayant une première surface parallèle à une direction dans laquelle le canal de refroidissement s'étend ;
un convertisseur élévateur (40) disposé d'un bout à l'autre d'un espace de la première surface sans être cloisonné par un élément formant bouclier thermique, le convertisseur élévateur incluant un capteur de courant (43) et un condensateur (45) disposé le long de la première surface ; et
un boîtier (30) qui contient l'assemblage de piles à combustible et le convertisseur élévateur dans un même espace, dans laquelle
au moins un élément parmi le capteur de courant et le condensateur est disposé d'un côté amont du milieu du canal de refroidissement, dans la direction dans laquelle le canal de refroidissement s'étend.

2. Unité de pile à combustible selon la revendication 1, dans laquelle le capteur de courant et le condensateur sont agencés côte à côte dans une direction orthogonale à la direction dans laquelle le canal de refroidissement s'étend, du côté amont du milieu du canal de refroidissement.

3. Unité de pile à combustible selon la revendication 2, dans laquelle :
le convertisseur élévateur inclut au moins un réacteur (42A, 42B, 42C, 42D) et un module d'alimentation (44) ; et
l'au moins un réacteur et le module d'alimentation sont agencés côte à côte dans une direction orthogonale à la direction dans laquelle le canal de refroidissement s'étend, tout comme le capteur de courant et le condensateur.

4. Unité de pile à combustible selon la revendication 3, dans laquelle :
un refroidisseur (48) où un liquide de refroidissement différent du liquide de refroidissement qui s'écoule dans le canal de refroidissement est fourni pour à la fois l'au moins un réacteur et le module d'alimentation ; et
le capteur de courant est entouré du canal de refroidissement, du refroidisseur de l'au moins un réacteur, et du refroidisseur du module d'alimentation.

5. Unité de pile à combustible selon la revendication 3, dans laquelle le capteur de courant est fourni sur une ligne connectant l'au moins un réacteur et le refroidisseur du module d'alimentation.

6. Unité de pile à combustible selon la revendication 1, dans laquelle au moins un élément parmi le capteur de courant et le condensateur est disposé dans un emplacement où une température ambiante n'est pas inférieure à 90 °C et pas supérieure à 100 °C lorsque l'assemblage de piles à combustible est en fonctionnement.

7. Unité de pile à combustible selon les revendications 1 à 6, dans laquelle l'assemblage de piles à combustible et le convertisseur élévateur sont directement connectés par des barres omnibus (28, 29).
